# EUROPEAN PATENT SPECIFICATION

(11) **EP 1 944 626 B1**
(45) Date of publication and mention of the grant of the patent: **05.06.2013**
(21) Application number: 07020626.3
(22) Date of filing: 22.10.2007
(51) Int. Cl.: G01T 1/00

(54) **Standoff radiation imaging detector**
Fernstrahlungsbildgebungsdetektor
Détecteur d'éléments d'espacement par imagerie à radiation

(30) Priority: 09.11.2006 CA 2568108
(43) Date of publication of application: 16.07.2008
(73) Proprietor: HER MAJESTY THE QUEEN AS REPRESENTED BY THE MINISTER OF NATIONAL DEFENCE OF HER MAJESTY'S CANADIAN GOVERNMENT, Ottawa, Ontario K1A 0K2 (CA)
(72) Inventor: Haslip, Dean S., Ottawa Ontario K2 J 4L1 (CA); Cousins, Thomas, Dunrobin Ontario K0A 1T0 (CA); Koslowsky, Vernon, Deep River Ontario K0J 1P0 (CA); Ing, Harry, Deep River Ontario K0J 1P0 (CA); Andrews, Hugh R., Pembroke Ontario K8A 1P0 (CA); Clifford, Edward T.H., Deep River Ontario K0J 1P0 (CA); Locklin, Darren, Petawawa Ontario K8H 2N7 (CA)
(74) Representative: Jackson, Derek Charles

(56) References cited:
- US-B1- 6 281 502
- US-B1- 6 448 562
- SERGIY M BASCHENKO ET AL: "Remote optical detection of alpha particle sources; Remote optical detection of alpha particle sources", JOURNAL OF RADIOLOGICAL PROTECTION, INSTITUTE OF PHYSICS PUBLISHING, BRISTOL, GB, vol. 24, no. 1, 1 March 2004 (2004-03-01), pages 75-82, XP020050580, ISSN: 0952-4746, DOI: DOI:10.1088/0952-4746/24/1/006

## Description

### FIELD OF THE INVENTION

This invention relates to a remote sensor for radioactive material.

More specifically, the invention relates to a sensor that obtains images of an area from selected UV bands associated with air luminescence generated by any radioactive material in that area.

### BACKGROUND OF THE INVENTION

The proliferation of nuclear weapons and the possible detonation of a radiological dispersal device (a dirty bomb), the deliberate damaging of a radioisotope production facility and many other terrorist scenarios have generated a requirement for detecting nuclear materials from a distance. Nuclear materials are difficult to detect with most presently available detectors such as gamma ray detectors, because such detectors must be close to a nuclear source, i.e. within the radiation field generated by a radioactive source in order for detection to occur.

Nuclear materials generate ionizing radiation in the surrounding atmosphere, which creates air luminescence that can be imaged from a distance. Air luminescence is a result of de-excitation of excited molecular nitrogen and nitrogen molecular ions (N₂⁺) created by the ionizing process. The wavelength of the luminescence lies primarily in several ultraviolet bands between 280 and 425nm and has unique spectral fingerprints consisting primarily of N₂ second positive group emissions.

US Patent 6,448,562, issued to William A. Seidler et al mentions this principle in order to provide a remote sensor for detecting a nuclear source by obtaining an image of the source from photons generated by ionizing radiation in ultraviolet spectral regions. The patent teaches the use of an optical system for remotely detecting selected wavelengths of photon emissions from an airglow caused by a source of ionizing radiation by filtering sufficient out-of-band wavelengths while transmitting enough in-band wavelengths to allow detection of nuclear material with the selected wavelengths. The invention may be used to remotely detect N₂⁺ line emissions or other ultraviolet (UV) line emissions having defined naturally occurring properties. The camera used in the invention responds to photons resulting from "airglow" caused by gamma rays emitted from a nuclear material source which hit atmospheric N₂ and result in N₂⁺ ions. The N₂⁺ ions then emit photons at wavelengths of, for example 391.4 nm and 358.4 nm, as they return to a groundstate. The patent teaches that the nitrogen molecule in an excited state emits ultraviolet photons with a wavelength of 391.4 nm. (and others, for example 337.1 nm, 357.7 nm and 380.5 nm).

The patent also teaches that naturally occurring "airglow" in the upper atmosphere and in parts of the "ionosphere" normally found about 40-100 kilometers (km) above the Earth's surface but varying around the Earth results from naturally occurring electrons, gamma rays, and X-rays from space which bombard N₂ atoms in the ionosphere producing N₂⁺ ions and photons, and that natural "airglow" occurs from solar winds colliding with the ionosphere. However, at about 20 kilometers altitude, virtually no naturally occurring gamma rays or X-rays are present and that the 391.4 nm wavelength was selected for the operating wavelength due to the fact that at night the UV region of the spectrum has very low background noise below 20 km altitude.

However, there is background light in the UV region of the spectrum at night caused by reflected moonlight or street lamps at night.

The air luminescence induced by ionizing radiation from nuclear material is typically 10⁸ (i.e. 100 million) times weaker than daylight, which necessitates measurements during darkness.

A paper by Sergiy M. Baschenko et al entitled "Remote optical detection of alpha particle sources", published in Journal of Radiological Protection, Institute of Physics Publishing, Bristol, GB, Vol. 24, No. 1, March 1, 2004, describes a laboratory apparatus for detecting alpha particle sources which includes an alpha particle source, a monochromator for isolating a portion of the radiation emanating from the source, a photodetector spectrally matched to the approximate wavelength of the air alpha RL and a PC for controlling the scanning of wavelengths of radiation from the source.

U. S. Patent No. 6,281,502, issued to Jean-Francois Pineau on August 28, 2011, discloses a device for locating alpha particle sources in an environment including a surface sensitive to UV radiation, a gaseous scintillator medium containing nitrogen filling the environment, and optical means for forming an image from the UV radiation on the sensitive surface. The sensitive surface can be photographic film or optical sensors such as photo-diodes. A PC acquires a signal from the photosensitive surface and displays an image formed on the detector.

### SUMMARY OF THE INVENTION

An object of the present invention is to provide a sensor to obtain images of any air luminescence generated by a radioactive source.

According to one embodiment the invention relates to a sensor for obtaining images of air luminescence generated by an alpha and beta radiation source comprising a telescope and further including:
six UV sensitive cameras;
an optical system in an optical path of said telescope for simultaneously imaging an area in a plurality of UV bands and directing an image of that area to each of the UV sensitive cameras;
   wherein said optical system directs
   (i) one preselected UV spectral band to each of the cameras;
   (ii) at least two of the images of preselected spectral bands where N₂ 2^{nd} positive group emissions occur from any air luminescence to two separate cameras, and
   (iii) at least one UV band located between the preselected spectral bands to at least another of the cameras to indicate a background level in that spectral region; and
a microprocessor for digitally fusing the images from all cameras (3) to yield one image of air luminescence.

The invention also relates to a method of obtaining images of air luminescence generated by an alpha and beta radiation source comprising the steps of:
directing the light from a telescope through an optical system to six UV sensitive cameras;
filtering the light for directing one of a plurality of preselected UV spectral bands to each camera, wherein UV spectral bands N₂ 2^{nd} positive group emissions occurring from any air luminescence are directed to at least two of said cameras, and at least one other UV spectral band between the N₂ 2^{nd} positive group emissions spectral bands are directed to at least another of the cameras; and
digitally fusing images from all of the cameras are digitally fused to yield one image of air luminescence indicative of radioactivity.

### BRIEF DESCRIPTION OF THE DRAWINGS

Preferred embodiments of the invention will now be described in more detail with reference to the accompanying drawings, wherein:
Figure 1 is a block diagram of an imager in accordance with the present invention;
Figure 2 is a schematic line drawing of an imager according to an embodiment of the present invention; and
Figure 3 are graphs of band-pass features of the imager for the cameras shown in Figure 1.

### DESCRIPTION OF THE PREFERRED EMBODIMENTS

The darkness provided outside at night, including moonlit conditions is suitable for obtaining images of that luminescence by a sensor, according to the present invention, which obtains images in six wavelength windows with two of those six windows being background windows to provide discrimination against interfering broadband light and blackbody emitters such as moonlight and streetlights.

The real-time measurement of the sensor background (noise) is necessary, because it must be subtracted from other measured images in order to obtain a true signal. That noise is time dependent due to a camera's temperature fluctuations caused by temperature changes in the field environment and it can also vary with camera gain and exposure times which can vary between measurements.

Experience with the sensor of the present invention indicates that interleaved background measurements on a one second time scale is far superior to measurements acquired several minutes apart.

Based on measurements performed by the inventors, it has been confirmed that the air luminescence surrounding a radioactive source can indeed be detected with imaging systems, that the radio-luminescence has a unique spectral fingerprint consisting primarily of the N₂2^{nd} positive group emissions and that those emissions constitute about 80% of the radio-luminescence. Furthermore, the N₂2^{nd} positive group emissions are not severely masked by natural or man-made light at night.

The construction of a laboratory sensor according to the present invention consisted of a special Maksutov telescope, special narrow-band filters, beam-splitters and ultra-sensitive cameras. Images from four spectral windows were acquired simultaneously with the apparatus and then combined digitally with image processing techniques to enhance the radio-luminescent signal. The results clearly illustrated that radio-luminescence could be imaged at a distance with a high detection efficiency. Image fusion by powerful processors is desirable to provide a near real-time image of the radio-luminescence so that an operator can make timely decisions on the state of a measurement rather than wait for several minutes only to discover, for example, that interfering light has corrupted the images.

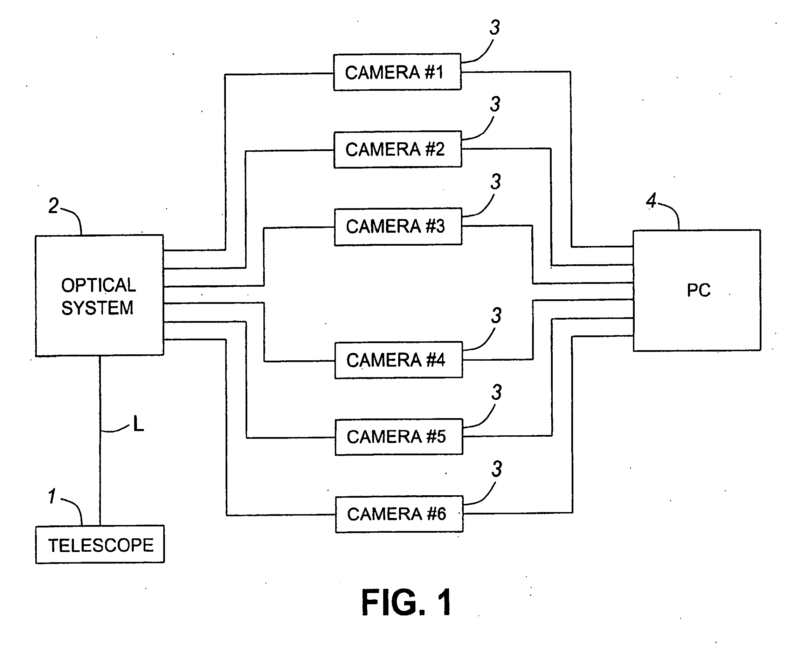

With reference to Fig. 1, the basic elements of the image include a telescope 1, which is preferably a Maksutov telescope and retro-reflector which directs light L to an optical system 2, a plurality of cameras 3 for receiving light from the optical system 2 and a personal computer 4 connected to all of the cameras.

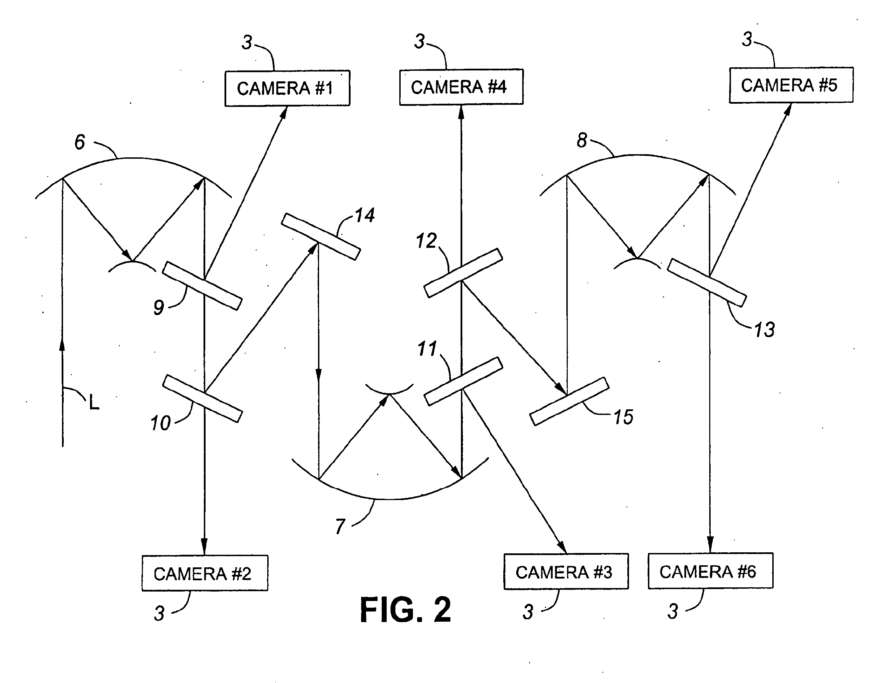

As shown in Fig. 2, the optical system 2 includes three Offner or other unit-magnification optical relay systems 6, 7 and 8, and five beam splitters 9 to 13. Two additional mirrors 14 and 15 in the optical system "fold" a light beam into a compact opto-mechanical arrangement and focus it onto the image plane of the six UV-sensitive, intensified and cooled CCD cameras 3 (Cameras #1, #2, #3, #4, #5 and #6). A near-IR sensitive intensified and cooled CCD camera (not shown) and the custom mounted PC 4 are used in association with the imager. The PC 4 consists of a motherboard, two 4-channel frame-grabbers one u-processor, an I/O board, an eight channel RS-232 board, a USB interface and seven custom camera interface boards. The footprint of the apparatus is about 1.5 m² with the imager being about 1.5 m high when mounted on its tripod. The total weight, including the mounted hardware is around 122 kg. It can be transported in three parts, which include (i) a custom heavy-duty tripod (16 kg), (ii) a pan and tilt stage with 3 power supplies (18 kg), and (iii) the imager, including the cameras, computer and electronics (88 kg).

The focal length of the telescope 1 is approximately 1170 mm resulting in an optical speed of F-value of 4.5 with the relay systems each having unit magnification. Focusing is accomplished by adjusting the position of a retro-reflector in the optical path between the Maksutov telescope and the first optical relay 6.

The single near IR sensitive intensified and cooled CCD camera, which is sensitive to visible and near-infrared light is mounted adjacent to the sensor with its own telescopic lens, is used for aiming the imager.

Because of the extremely low detected light levels from air luminescence, it is important that losses in the optical system be kept to a minimum. Consequently, all of the mirrors have highly reflective coatings, the beam-splitters are nearly lossless, vignetting (shadowing created by obstacles in the path of light) is minimized and the cameras have single-photon detection sensitivity. Any stray light entering the telescope, i.e. light entering the telescope from beyond the field-of-view, is trapped before it scatters towards the cameras and interferes with the detection capabilities of the cameras.

The telescope 1 for the prototype sensor is a Makutsov type where a secondary mirror directs reflected light through an aperture in the center of the primary mirror which is a common telescope configuration. The main advantage of the telescope is its short insertion length due to the folded nature of the light path. The telescope 1 was used in order to minimize the footprint and improve portability. It can also be easily scaled to larger objectives.

A prototype utilized a Maksutov design telescope, which combines refractive and reflective elements, i.e. it is catadioptric. One advantage of using such a telescope is that all of the mirror components can be spherical in shape, which are more economically fabricated and more easily aligned. A glass lens at the entrance to the telescope corrects for aberrations in the telescope which occur due to the use of simple spherical mirrors and it also acts as a dust seal. The curvature of the inside of the lens has been constrained to equal that of the secondary mirror which is created by making the central portion of the inside of the lens reflective. Baffles between the secondary and primary mirrors reduce much of the undesirable stray light. A cylindrical light shield is extendable at the front of the telescope. The insertion length of the telescope is about 350 mm with a light shield that can be extended an additional 150 mm.

Stray visible light must be significantly attenuated if weak sources of UV from air luminescence are to be imaged by the cameras since they are sensitive to both UV and visible light. This is accomplished by the use of wavelength-selective reflectors, baffles, specialty glasses and careful optical layout. Optical pupils, such as aperture stops, field stops and Lyot stops have been used to reduce stray light from reaching the image planes of the cameras.

Mirror surfaces in the telescope reflect light between 280 nm and 420 nm.

Anti-reflection coatings were also applied to the Maksutov corrector lens at the entrance to the telescope to reduce light loss at the glass-air boundaries and to reflect a substantial portion of the visible spectrum while transmitting the UV spectrum towards the primary mirror.

Image exposure is controlled by an electronic shutter in each camera 3. The cameras 3 are dual-stage intensified, Peltier cooled CCD imagers. Intensifier dark noise and CCD noise dominate images for exposures longer than 0.5s. Therefore, background measurements are interleaved with signal measurements in order to permit the accurate correction of the signal for the deleterious effect of background noise. This is achieved by periodically recording the background image while the electronic shutter is closed.

The function of the mirror systems 6 and 7 is to split the incoming light into three spectral windows and re-image the light in each window with unit magnification. As illustrated in Fig. 2, two of the light paths are each directed to cameras 3 while the remaining light is directed to the next mirror relay system. The last relay mirror system 8 splits the incoming light into only two spectral windows with unit magnification. Each is directed to a camera. Six spectral images can be achieved with three relay systems. An Offner relay system consists of a primary and secondary mirror, both of which are spherical and fabricated from blackened (NGI) glass coated to reflect 280 nm to 420 nm light. They are rectangular in profile and are about 200 mm long by 100 mm wide. The rectangular shape is necessary so that light reflected from three of the five beam-splitters will not be obstructed. The secondary mirrors of the relay system are manually adjustable in tilt and the primary mirrors are mounted on short spacers that can be altered in length should a tilt adjustment be necessary at this location.

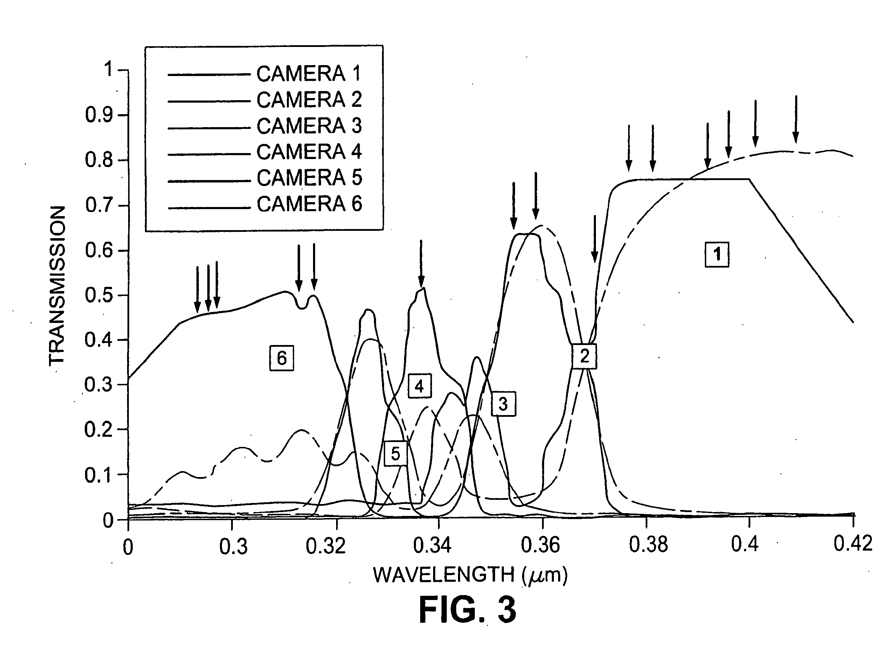

The beam-splitters 9 - 13 are fabricated from specially coated fused-silica glass to reflect light in selective color bands (as illustrated in Figure 3). Losses are about 3% per beam-splitter. The beam-splitters are manually adjustable in tilt to facilitate light-beam alignment onto the cameras.

The reflector and preferred Offner relay systems are fabricated from high-optical density NGI glass with reflective surfaces coated to reflect only 280 nm to 420 nm light. Unreflected light is transmitted by the coating and absorbed by black dye in the glass reducing stray light from scattering further into the sensor.

Simultaneous focusing of all cameras is provided, with one focusing adjustment consisting of a retro-reflector that is located behind the telescope's image plane. The retro-reflector creates a folded path that is extendable to accommodate targets between 30 m and infinity. The reflector is mounted on a precision slide with 2-inches of travel. A stepping motor under computer control drives the slide and no other optical components need to be adjusted to simultaneously focus an image in each camera.

The sensor simultaneously images air luminescence in 6 spectral windows as illustrated by the graphs in Figure 3 where solid lines represent the design band pass and the dashed lines represent the measured band pass. Four of the spectral windows (graphs 1, 2, 4 and 6) are centered at 390 nm, 356 nm, 337 nm and 316 nm which cover strong transitions of the N₂ molecule and the remaining windows are centered at spectral regions 345 nm and 322 nm (graphs 3 and 5) which lie in a spectral region that contains very little transition strength i.e. they are primarily sensitive to interfering broadband light such as blackbody radiation.

In operation, light from the telescope 1 is directed to the first relay 6, which redirects the light beam to a first beam-splitter 9. The beam-splitter 9 reflects light in one wavelength window to Camera #1 and transmits the remaining light to a second beam-splitter 10, which in turn directs the light beam in a second wavelength window to Camera #2 and reflects the remaining light to a first mirror 14. The mirror 14 then reflects the light to a second relay 7, which redirects the light to a third beam-splitter 11. The beam-splitter 11 reflects the light in a third wavelength window to Camera #3 and transmits light to a fourth beam-splitter 12, which directs light in a fourth wavelength window to Camera #4. Remaining light is reflected from beam-splitter 12 to a mirror 15 which reflects the light to a third relay 8. The third relay 8 redirects the light path to a fifth beam-splitter 13, which reflects the light in a fifth wavelength window to camera #5 and transmits the remaining light to Camera #6.

The images from all six cameras are numerically aligned, background-subtracted, filtered, down-sampled and signal-averaged prior to image fusion by a microprocessor, which occurs in near-real time. The image enhancement method employed is a 2-dimensional extension of the spectral unfolding methods often utilized in radiation dosimetry. It reduces six images to one signal image and one (or more) background images. Four of the spectral windows are centered at spectral windows 366 - 420 nm, preferably 390 nm; 348 - 366 nm, preferably 356 nm; 331 - 346 nm, preferably 337 nm, and 280 - 322 nm, preferably 316 nm that cover strong transitions of the N₂ molecule (see Figure 3), and the remaining windows lie in spectral regions 342 - 348 nm, preferably 345 nm and 318 - 327, preferably 322 nm that contain very little emission i.e. they are "background" windows.

Tests were carried out at Defence R&D Canada (DRDC) Ottawa with an α-target (up to four 6mCi ²⁴¹Am source strips approximately 1" wide by 6" long) and β targets (a 0.5Ci ⁹⁰Sr target and a 2Ci ¹⁴⁷Pm target) with target distances of 30m to 135 m. At 30 m the alpha source and beta sources are both visible. The ¹⁴⁷Pm source appeared more intense than the ⁹⁰Sr source, because it provides a higher energy density near the source. The ²⁴¹Am sources can also be detected at a target distance of 500 m. Moonlight and street lights illuminating a snow-covered test field do not prevent the α and β sources from being detected, provided that interfering light is not scattered directly into the telescope by the snow.

## Claims

1. A sensor for obtaining images of air luminescence generated by an alpha and beta radiation source comprising a telescope (1), **characterized in that** the sensor further comprises:
six UV sensitive cameras (3);
an optical system (2) in an optical path of said telescope (1) for simultaneously imaging an area in a plurality of UV bands and directing an image of that area to each of the UV sensitive cameras (3);
wherein said optical system is adapted to direct
(i) one preselected UV spectral band to each of the cameras (3);
(ii) at least two of the images of preselected spectral bands where N₂ 2^{nd} positive group emissions occur from any air luminescence to two separate cameras (3), and
(iii) at least one UV band located between the preselected spectral bands to at least another of the cameras (3) to indicate a background level **in that** spectral region; and
a microprocessor (4) for digitally fusing the images from all cameras (3) to yield one image of air luminescence.

2. The sensor of claim 1, wherein the optical system includes relays (6, 7, 8), mirrors (14, 15) and beam splitters (9, 10, 11, 12, 13) creating a folded light path.

3. The sensor of claim 2, wherein the beam-splitters (9, 10, 11, 12, 13) are formed of fused-silica glass coated to reflect light in selected spectral bands.

4. The sensor of any preceding claim wherein the preselected UV spectral bands lie in the wavelength windows 366 - 420 nm, 348 - 366 nm, 331 - 346 nm and 280 - 322 nm.

5. The sensor of claim 4, wherein the preselected UV spectral bands are centered at 390 nm, 337 nm and 316 nm.

6. The sensor of any preceding claim, wherein said at least one other UV band lies in one of the wavelength windows 342 - 348 nm and 318 - 327 nm to form an image that is directed to a UV sensitive and cooled CCD camera (3).

7. The sensor of claim 6, wherein said at least one other UV band is centered at one of 345 nm and 322 nm.

8. The sensor of any preceding claim, wherein the telescope (1) is catadioptric.

9. The sensor of any one of claims 2 to 8, wherein the relays (6, 7, 8) are three unit magnification systems formed from high density NGI glass with reflective surfaces coated to reflect only 280 nm to 420 nm light.

10. The sensor of claim 9 including five beam-splitters (9,10,11,12,13) and two mirrors (14,15) to fold the light beam and focus selected UV spectral bands onto an image plane of the six UV-sensitive cameras (3).

11. The sensor of claim 10, wherein the beam-splitters (9, 10, 11, 12, 13) are coated fused-silica glass to reflect light in preselected spectral bands.

12. The sensor of claim 10 or 11 including a slide; and light path from the telescope (1) to the optical mirror system movable on said slide for simultaneous focusing the light path onto an image plane of each camera (3).

13. The sensor of claim 12, including a stepping motor controlled by said microprocessor (4) for driving the slide.

14. The sensor of any one of claims 9 to 13, including a glass lens at an entrance to the telescope (1) for correcting for aberrations in the telescope (1), said lens having an inside central portion reflective for making a secondary mirror of the telescope.

15. A method of obtaining images of air luminescence generated by an alpha and beta radiation source **characterised by** the steps of:
directing the light from a telescope through an optical system (2) to six UV sensitive cameras (3);
filtering the light for directing one of a plurality of preselected UV spectral bands to each camera (3), wherein UV spectral bands N₂ 2^{nd} positive group emissions occurring from any air luminescence are directed to at least two of said cameras (3), and at least one other UV spectral band between the N₂ 2^{nd} positive group emissions spectral bands is directed to at least another of the cameras (3); and
digitally fusing images from all of the cameras (3) to yield one image of air luminescence indicative of radioactivity.

16. The method of claim 15, wherein the UV spectral bands where N₂ 2nd positive group emissions occur lie in the wavelength windows 366 - 420 nm, 348 - 366 nm, 331 - 346 nm and 280 - 322 nm.

17. The method of claim 16, wherein the UV spectral bands where N₂ 2^{nd} positive group emissions occur are centered at 390, 356, 337 and 316 nm.

18. The method of any one of claims 15 to 17, wherein the at least one other spectral band lies in the wavelength windows 342 - 348 nm and 318 - 327 nm.

19. The method of claim 18, wherein the at least one other spectral band is centered at one of 345 and 322 nm.

## Patentansprüche

1. Sensor zum Gewinnen von Luftlumineszenzbildern, die durch eine Alpha- und Beta-Strahlungsquelle mit einem Teleskop (1) erzeugt wurden, **dadurch gekennzeichnet, dass** der Sensor ferner Folgendes umfasst:
sechs UV-sensitive Kameras (3);
ein optisches System (2) in einem Lichtweg des genannten Teleskops (1) zum gleichzeitigen Abbilden eines Bereichs in mehreren UV-Bändern und zum Leiten eines Bilds dieses Bereichs zu jeder der UV-sensitiven Kameras (3);
wobei das genannte optische System so ausgelegt ist, dass es:
(i) ein vorgewähltes UV-Spektralband zu jeder der Kameras (3) leitet;
(ii) wenigstens zwei der Bilder von vorgewählten Spektralbändern, wobei N₂-Emissionen der zweiten positiven Gruppe von jeder Luftlumineszenz erfolgen, zu zwei separaten Kameras (3) leitet, und
(iii) wenigstens ein UV-Band, das sich zwischen den vorgewählten Spektralbändern befindet, zu wenigstens einer anderen der Kameras (3) leitet, um ein Hintergrundniveau in dieser Spektralregion anzuzeigen; und
einen Mikroprozessor (4) zum digitalen Zusammenfügen der Bilder von allen Kameras (3) zu einem Luftlumineszenzbild.

2. Sensor nach Anspruch 1, wobei das optische System Relais (6, 7, 8), Spiegel (14, 15) und Strahlenteiler (9, 10, 11, 12, 13) beinhaltet, die einen gefalteten Lichtweg erzeugen.

3. Sensor nach Anspruch 2, wobei die Strahlenteiler (9, 10, 11, 12, 13) aus Quarzglas gebildet sind, das zum Reflektieren von Licht in gewählten Spektralbändern beschichtet ist.

4. Sensor nach einem der vorherigen Ansprüche, wobei die vorgewählten UV-Spektralbänder in den Wellenlängenfenstern 366 - 420 nm, 348 - 366 nm, 331 - 346 nm und 280 - 322 nm liegen.

5. Sensor nach Anspruch 4, wobei die vorgewählten UV-Spektralbänder auf 390 nm, 337 nm und 316 nm zentriert sind.

6. Sensor nach einem der vorherigen Ansprüche, wobei das genannte wenigstens eine andere UV-Band in einem der Wellenlängenfenster 342 - 348 nm und 318 - 327 nm liegt, um ein Bild zu bilden, das auf eine UV-sensitive und gekühlte CCD-Kamera (3) gerichtet ist.

7. Sensor nach Anspruch 6, wobei das genannte wenigstens eine andere UV-Band auf 345 nm oder 322 nm zentriert ist.

8. Sensor nach einem der vorherigen Ansprüche, wobei das Teleskop (1) katadioptrisch ist.

9. Sensor nach einem der Ansprüche 2 bis 8, wobei die Relais (6, 7, 8) drei Einheitsvergrößerungssysteme sind, die aus hochdichtem NGI-Glas mit reflektierenden Oberflächen gebildet sind, die zum Reflektieren nur von Licht mit 280 nm bis 420 nm beschichtet sind.

10. Sensor nach Anspruch 9 mit fünf Strahlenteilern (9, 10, 11, 12, 13) und zwei Spiegeln (14, 15), um den Lichtstrahl zu falten und gewählte UV-Spektralbänder auf eine Bildebene der sechs UV-sensitiven Kameras (3) zu falten.

11. Sensor nach Anspruch 10, wobei die Strahlenteiler (9, 10, 11, 12, 13) beschichtetes Quarzglas sind, um Licht in vorgewählten Spektralbändern zu reflektieren.

12. Sensor nach Anspruch 10 oder 11 mit einer Gleitbahn; und einem Lichtweg vom Teleskop (1) zum optischen Spiegelsystem, das auf der genannten Gleitbahn beweglich ist, um den Lichtweg gleichzeitig auf eine Bildebene jeder Kamera (3) zu fokussieren.

13. Sensor nach Anspruch 12, der einen Schrittmotor aufweist, der von dem genannten Mikroprozessor (4) zum Antreiben der Gleitbahn gesteuert wird.

14. Sensor nach einem der Ansprüche 9 bis 13, mit einer Glaslinse an einem Eingang in das Teleskop (1) zum Korrigieren von Aberrationen im Teleskop (1), wobei die genannte Linse einen zentralen Innenabschnitt aufweist, der reflektierend ist, um einen sekundären Spiegel des Teleskops zu erzeugen.

15. Verfahren zum Gewinnen von Luftlumineszenzbildern, die mit einer Alpha- und Beta-Strahlungsquelle erzeugt werden, **gekennzeichnet durch** die folgenden Schritte:
Leiten des Lichts von einem Teleskop **durch** ein optisches System (2) zu sechs UV-sensitiven Kameras (3);
Filtern des Lichts zum Leiten von einem von mehreren vorgewählten UV-Spektralbändern zu jeder Kamera (3), wobei von jeder Luftlumineszenz auftretende N₂-Emissionen der zweiten positiven Gruppe in den UV-Spektralbändern zu wenigstens zwei der genannten Kameras (3) geleitet werden und wenigstens ein anderes UV-Spektralband unter den N₂-Emissionsspektralbändern der zweiten positiven Gruppen zu wenigstens einer anderen der Kameras (3) geleitet wird; und
digitales Zusammenfügen von Bildern von allen Kameras (3) zu einem Luftlumineszenzbild, das Radioaktivität anzeigt.

16. Verfahren nach Anspruch 15, wobei die UV-Spektralbänder, auf denen N₂-Emissionen der zweiten positive Gruppe auftreten, in den Wellenlängenfenstern 366 - 420 nm, 348 - 366 nm, 331 - 346 nm und 280 - 322 nm liegen.

17. Verfahren nach Anspruch 16, wobei die UV-Spektralbänder, bei denen N₂-Emissionen der zweiten positive Gruppe auftreten, bei 390, 356, 337 und 316 nm zentriert sind.

18. Verfahren nach einem der Ansprüche 15 bis 17, wobei das wenigstens eine andere Spektralband in den Wellenlängenfenstern 342 - 348 nm und 318 - 327 nm liegt.

19. Verfahren nach Anspruch 18, wobei das wenigstens eine andere Spektralband auf 345 oder 322 nm zentriert ist.

## Revendications

1. Capteur pour obtenir des images de la luminescence de l'air générées par une source de rayonnement alpha et bêta comprenant un télescope (1), **caractérisé en ce que** le capteur comprend en outre :
six caméras sensibles aux UV (3) ;
un système optique (2) dans un trajet optique dudit télescope (1) pour créer simultanément des images d'une surface dans une pluralité de bandes UV et diriger une image de cette surface sur chacune des caméras sensibles aux UV (3) ;
dans lequel ledit système optique est adapté pour diriger
(i) une bande spectrale UV présélectionnée sur chacune des caméras (3) ;
(ii) au moins deux des images des bandes spectrales présélectionnées où des émissions de groupement positif secondaire N₂ se produisent en provenance de toute luminescence de l'air sur deux caméras séparées (3), et
(iii) au moins une bande UV située entre les bandes spectrales présélectionnées sur au moins une autre des caméras (3) pour indiquer un niveau d'arrière-plan dans cette région spectrale, et
un microprocesseur (4) pour coller de façon numérique les images provenant de toutes les caméras (3) pour donner une image de la luminescence de l'air.

2. Capteur selon la revendication 1, dans lequel le système optique comprend des relais (6, 7, 8), des miroirs (14, 15) et des diviseurs de faisceau (9, 10, 11, 12, 13) créant un trajet de lumière plié.

3. Capteur selon la revendication 2, dans lequel les diviseurs de faisceau (9, 10, 11, 12, 13) sont formés de verre de silice fondue enduit pour réfléchir la lumière dans des bandes spectrales sélectionnées.

4. Capteur selon l'une quelconque des revendications précédentes, dans lequel les bandes spectrales UV présélectionnées se trouvent dans les fenêtres de longueur d'ondes de 366 - 420 nm, 348 - 366 nm, 331 - 346 nm et 280 - 322 nm.

5. Capteur selon la revendication 4, dans lequel les bandes spectrales UV présélectionnées sont centrées sur 390 nm, 337 nm et 316 nm.

6. Capteur selon l'une quelconque des revendications précédentes, dans lequel ladite au moins une autre bande UV se trouve dans une des fenêtres de longueur d'ondes de 342 - 348 nm et 318 - 327 nm pour former une image qui est dirigée vers une caméra CCD sensible aux UV et refroidie (3).

7. Capteur selon la revendication 6, dans lequel ladite au moins une autre bande UV est centrée sur une longueur d'onde de 345 nm ou 322 nm.

8. Capteur selon l'une quelconque des revendications précédentes, dans lequel le télescope (1) est catadioptrique.

9. Capteur selon l'une quelconque des revendications 2 à 8, dans lequel les relais (6, 7, 8) sont trois systèmes de grossissement unitaire formés à partir de verre NGI haute densité avec des surfaces réfléchissantes enduites pour réfléchir uniquement la lumière comprise entre 280 nm et 420 nm.

10. Capteur selon la revendication 9 comprenant cinq diviseurs de faisceau (9, 10, 11, 12, 13) et deux miroirs (14, 15) pour plier le faisceau lumineux et concentrer les bandes spectrales UV sélectionnées sur un plan image des six caméras sensibles aux UV (3).

11. Capteur selon la revendication 10, dans lequel les diviseurs de faisceau (9, 10, 11, 12, 13) sont enduits de verre de silice fondue pour réfléchir la lumière dans des bandes spectrales présélectionnées.

12. Capteur selon la revendication 10 ou la revendication 11 comprenant une lamelle ; et un trajet lumineux en provenance du télescope (1) vers le système de miroir optique amovible sur ladite lamelle pour une mise au point simultanée du trajet lumineux sur un plan image de chaque caméra (3).

13. Capteur selon la revendication 12, comprenant un moteur pas-à-pas contrôlé par ledit microprocesseur (4) pour entraîner la lamelle.

14. Capteur selon l'une quelconque des revendications 9 à 13, comprenant une lentille en verre au niveau d'une entrée du télescope (1) pour corriger des aberrations dans le télescope (1), ladite lentille ayant une portion centrale interne réfléchissante pour faire un miroir secondaire du télescope.

15. Procédé d'obtention d'images de luminescence de l'air générées par une source de rayonnement alpha et bêta **caractérisé par** les étapes consistant à :
diriger la lumière depuis un télescope dans un système optique (2) puis sur six caméras sensibles aux UV (3) ;
filtrer la lumière pour diriger une bande spectrale UV parmi une pluralité de bandes spectrales UV présélectionnées sur chaque caméra (3), dans laquelle des émissions de groupement positif secondaire N₂ de bandes spectrales UV se produisant en provenance de toute luminescence de l'air sont dirigées sur au moins deux desdites caméras (3), et au moins une autre bande spectrale UV entre les bandes spectrales à émissions de groupement positif secondaire N₂ est dirigée sur au moins une autre des caméras (3) ; et
coller de façon numérique les images provenant de toutes les caméras (3) pour donner une image de la luminescence de l'air indicatrice de la radioactivité.

16. Procédé selon la revendication 15, dans lequel les bandes spectrales UV où des émissions de groupement positif secondaire N₂ se produisent se trouvent dans les fenêtres de longueur d'ondes de 366 - 420 nm, 348 - 366 nm, 331 - 346 nm et 280 - 322 nm.

17. Procédé selon la revendication 16, dans lequel les bandes spectrales UV où des émissions de groupement positif secondaire N₂ se produisent sont centrées sur 390, 356, 337 et 316 nm.

18. Procédé selon l'une quelconque des revendications 15 à 17, dans lequel l'au moins une autre bande spectrale se trouve dans les fenêtres de longueur d'ondes de 342 - 348 nm et 318 - 327 nm.

19. Procédé selon la revendication 18, dans lequel au moins une autre bande spectrale est centrée sur une longueur d'ondes de 345 ou 322 nm.
